# EUROPEAN PATENT SPECIFICATION

(11) **EP 1 950 107 B1**
(45) Date of publication and mention of the grant of the patent: **11.01.2012**
(21) Application number: 07001924.5
(22) Date of filing: 29.01.2007
(51) Int. Cl.: B60R 25/00

(54) **Auto anti-theft system with door-mount wireless remote-control pushbutton**
Auto Diebstahlschutzsystem mit drahtlosem Tür-montiertem Fernbedienung-Druckknopf
Système d'antivol d'automobile avec un bouton-poussoir de télécommande monté sur une porte

(43) Date of publication of application: 30.07.2008
(73) Proprietor: Chen, Tse Hsing, Taipei Hsien (TW)
(72) Inventor: Chen, Tse Hsing, Taipei Hsien (TW)
(74) Representative: Kilian, Helmut

(56) References cited:
- EP-A2- 0 158 354
- EP-A2- 0 950 784
- EP-A2- 0 982 201
- US-A- 4 794 268
- US-A1- 2003 031 025
- US-B1- 6 853 853

## Description

### FIELD OF THE INVENTION

The present invention relates to an auto anti-theft system, and more particularly to an auto anti-theft system with door-mount wireless remote-control pushbutton, which can be used with cars of all versions from different brands and easily installed without the need of drilling holes or wiring on a car door, and allows a user to release or enable the anti-theft system directly beside the car.

The features of the preamble of independent claim 1 are known from EP-A-0158354.

### BACKGROUND OF THE INVENTION

An automobile is an important traffic means in the modern society. It is a good thing to buy and own a new car. However, almost all the car owners have the bothersome problem of guarding the car against theft. Currently, there are various types of auto anti-theft systems available in the market, and these anti-theft systems generally produce a deterrent effect by emitting a warning sound at the instant the car is invaded by a thief. With the development in electronic technology, the new generation of auto anti-theft systems provides diversified functions, such as interrupting fuel supply and/or disconnecting power supply when the car is invaded. Some auto anti-theft systems even include Bluetooth signal transmission function or satellite positioning function to completely stop theft.

The currently available auto anti-theft systems are different in their performance and effect. The auto anti-theft systems and remote-controlled power locks in early stages are generally controlled using a remote controller. However, a handle-mount pushbutton has been developed as part of an original anti-theft system for some advanced cars. A user may conveniently push the pushbutton on the door handle when he or she grips the door handle to open or close the car door to release or enable the auto anti-theft system without pressing the remote controller which put in the pocket. The auto anti-theft system with the handle-mount pushbutton is therefore a convenient, advanced, andhumanizeddesign.

With the auto anti-theft system having a handle-mount pushbutton, the user needs only to put the remote controller in a pocket without pressing it. When the user wants to get on his or her car, he or she needs only to push the pushbutton on the door handle, and the auto anti-theft system automatically wakens up a main controller in the car to send a signal and proceed with code matching with the remote controller in the user's pocket or carried by the user. When the code matching is successful, the anti-theft system is automatically released and the car door is unlocked. On the other hand, when the user gets off the car and closes the car door, he or she needs only to push the pushbutton on the door handle to enable the auto anti-theft system. It is not necessary to take out and operate the remote controller.

When it is desired to additionally mount this type of anti-theft system on a car, the car door or the door handle must be drilled for mounting the pushbutton, or a new handle must be used to replace the old one. Moreover, since there are too many different brands and versions of cars, it is uneconomical to develop a large quantity of handle with pushbuttons for each different car. And, most car owners are not willing to drill holes on their new cars for mounting the pushbutton.

It is therefore tried by the inventor to develop an auto anti-theft system with door-mount wireless remote-control pushbutton that may be mounted on all types of cars without the need of drilling holes or wiring the pushbutton to the control unit.

### SUMMARY OF THE INVENTION

A primary object of the present invention is to provide an auto anti-theft system with door-mount wireless remote-control pushbutton, which can be used with cars of all versions from different brands and easily installed without the need of drilling holes, wiring, or replacing a door handle.

Another object of the present invention is to provide an auto anti-theft system with door-mount wireless remote-control pushbutton, which is a humanized design allowing a user to release or enable the anti-theft system directly beside a car.

To achieve the above and other objects, the auto anti-theft system with door-mount wireless remote-control pushbutton according to the present invention includes a main controller installed in a car for controlling the operation of the anti-theft system; a remote controller being carried by a user for code matching; and a small-size wireless remote-control pushbutton, which includes a coupling section for removably mounting to a car of any version on or in the vicinity of the car door, such as on a door handle, a keyhole, a door surface, or a door window. The wireless remote-control pushbutton, the main controller, and the remote controller cooperate with one another to provide the functions of releasing and enabling the anti-theft system directly beside the car without pressing the remote controller button, making the anti-theft system a humanized design.

### BRIEF DESCRIPTION OF THE DRAWINGS

The structure and the technical means adopted by the present invention to achieve the above and other obj ects can be best understood by referring to the following detailed description of the preferred embodiments and the accompanying drawings, wherein
Fig. 1 is a block diagram of the auto anti-theft system according to a preferred embodiment of the present invention;
Fig. 2 is an exploded perspective view showing a first type of door-mount wireless remote-control pushbutton for the auto anti-theft system of the present invention;
Fig. 3 is an assembled view of Fig. 2;
Fig. 4 is a perspective view showing a second type of door-mount wireless remote-control pushbutton for the auto anti-theft system of the present invention suitable for mounting to a door handle;
Fig. 5 is a perspective view showing a third type of door-mount wireless remote-control pushbutton for the auto anti-theft system of the present invention suitable for mounting to a door edge;
Fig. 6 is a perspective view showing a fourth type of door-mount wireless remote-control pushbutton for the auto anti-theft system of the present invention suitable for mounting to a door surface near the door handle; and
Fig. 7 is a block diagram of an auto anti-theft system according to another embodiment of the present invention.

### DETAILED DESCRIPTION OF THE PREFERRED EMBODIMENTS

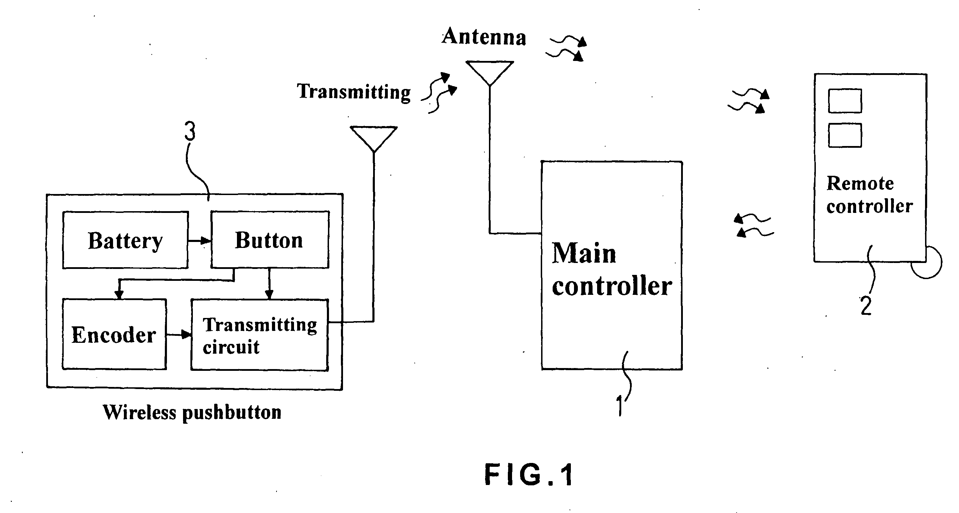

Please refer to Fig. 1 that is a block diagram of an auto anti-theft system with door-mount wireless remote-control pushbutton according to a preferred embodiment of the present invention. As shown, the auto anti-theft system of the present invention includes a main controller 1 mounted in a car for controlling the operation of the auto anti-theft system; a remote controller 2 normally carried by a user for code matching; and a small-size wireless remote-control pushbutton 3 mounted on or near a car door.

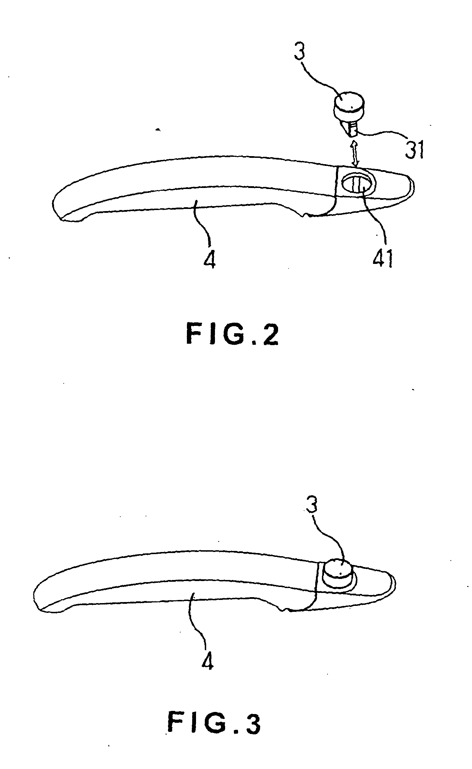

Figs. 2 to 6 show some different types of the small-size wireless remote-control pushbutton 3. Figs. 2 and 3 are exploded and assembled perspective views, respectively, of a first type of the small-size wireless remote-control pushbutton 3 having a one-legged coupling section 31, which is adapted to insert into a keyhole 41 on a door handle 4. Since most currently available cars have a remotely controllable door lock, the keyhole 41 on the door handle 4 is rarely used. Therefore, the very small wireless remote-control pushbutton 3 with one-legged coupling section 31 may be conveniently mounted to the door handle 4 by inserting the one-legged coupling section 31 into the keyhole 41, and be quickly dismounted when it is necessary to use the keyhole 41.

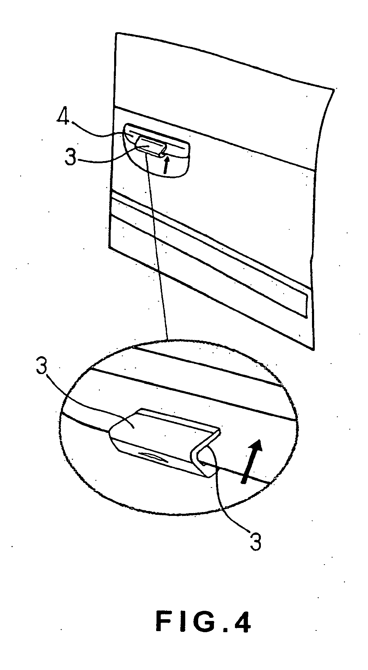

Fig. 4 shows a second type of the small-size wireless remote-control pushbutton 3 having a two-legged coupling section 31, which is suitable for clamping to a flat door handle 4.

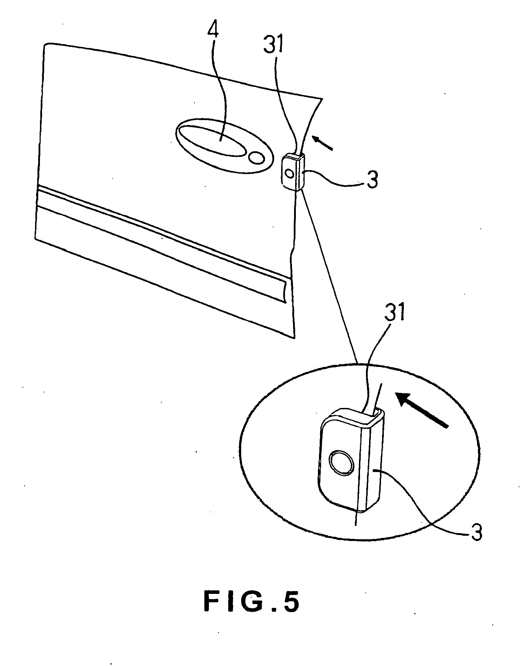

Fig. 5 shows a third type of the small-size wireless remote-control pushbutton 3 having a two-legged coupling section 31, which is suitable for clamping to a door edge.

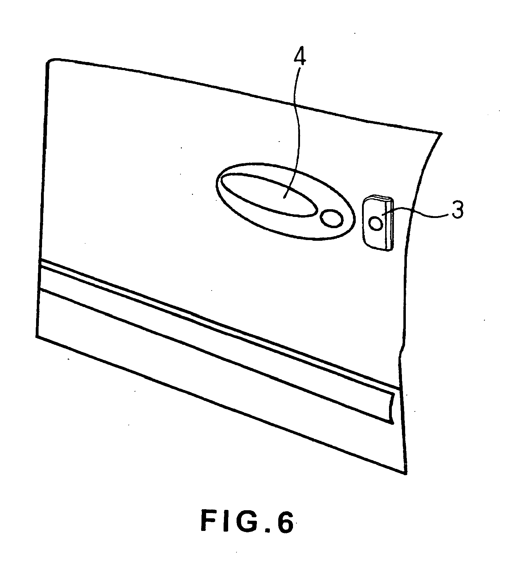

Fig. 6 shows a fourth type of the small-size wireless remote-control pushbutton 3 that does not include any coupling section but may be provided on a back with an adhesive for directly bonding to the door handle or on a door surface near the door handle.

Since the small-size wireless remote-control pushbutton 3 is a separate member designed for mounting or attaching to the door handle 4, the door edge, or the door surface, it is applicable to all versions of different brands of cars. The small-size wireless remote-control pushbutton 3 may be conveniently installed without the need of drilling hole, wiring, or replacing door handle.

In a conventional auto anti-theft system, a remote controller carried by a user is normally set to automatically send out a signal at intervals of a few seconds. When the remote controller is located near the car, and a main controller installed in the car receives a correct code from the remote controller, the anti-theft system is automatically released to unlock the car door. And, when the remote controller is located beyond an effective receiving range of the main controller, the anti-theft system is automatically enabled to lock the car door. However, when the remote controller is located at a critical signal receiving distance of the main controller, the main controller tends to be falsely operated and switches between releasing and enabling the anti-theft system quickly, causing inconveniences to the user or risks in safety to the car.

In the auto anti-theft system of the present invention, while the remote controller 2 is set to automatically send signals at intervals of a few seconds, the main controller 1 is set to proceed with code matching when it receives a signal, and then hold on for a few seconds when the code is found matched. The holding time set for the main controller 1 is preferably longer than the signal sending interval set for the remote controller 2, so that a user may get on the car without the need of waiting for the next signal sent to the main controller 1. In this manner, when the user moves into a range within which the main controller 1 can effectively receive a signal, he or she has to push the wireless remote-control pushbutton 3 to automatically release the anti-theft system and unlock the car door. And, when the user gets off the car, he or she may push the wireless remote-control pushbutton 3 before leaving the car, so as to lock the door and enable the anti-theft system. Therefore, the auto anti-theft system with the wireless remote-control pushbutton according to the present invention is very convenient and safe for use.

Alternatively, the main controller 1 of the auto anti-theft system of the present invention may be set to be wakened up by pushing the wireless remote-control pushbutton 3, so as to send a signal that has an effective range of only a few meters from the car. When the remote controller 2 carried by the user receives the signal sent by the main controller 1, it sends out a code to the main controller 1 for code matching. When the code is found matched, the anti-theft system is immediately released. And, when the user gets off the car and pushes the wireless remote-control pushbutton 3, the car door is locked and the anti-theft system is enabled.

It is also possible to set a master control code for the small-size wireless remote-control pushbutton 3 to control the unlocking of all car doors and the releasing of all setting for the anti-theft system.

Since the small-size wireless remote-control pushbutton 3 is designed for mounting to a door handle 4 or a door edge or on a door surface near the door handle, a user may conveniently push the wireless remote-control pushbutton 3 when he or she grips the door handle 4 to open the door, and a signal is wirelessly sent by the pushbutton 3 to waken up the main controller 1, so that the main controller 1 sends a signal to check the code sent by the remote controller 2 carried by the user. When the code is found correct by the main controller 1, the door is unlocked and the anti-theft system is released. Similarly, when the user gets off the car and closes the door, he or she needs only to push the wireless remote-control pushbutton 3 on or near the door handle 4, and a signal is sent by the pushbutton 3 to the main controller 1 in the car, so that main controller 1 locks the door and enables the anti-theft system. Therefore, the wireless remote-control pushbutton 3 is a humanized design for cooperating with the main controller 1 and the remote controller 2 to provide the functions of releasing and enabling the auto anti-theft system directly beside the car without the need of operating the remote controller.

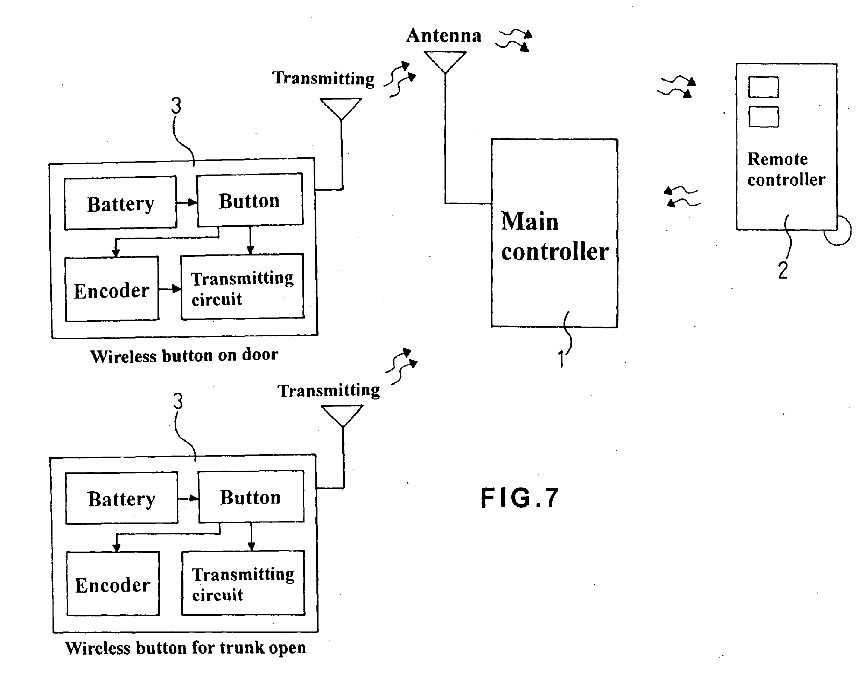

Fig. 7 is a block diagram of an auto anti-theft system with wireless remote-control pushbutton according to another embodiment of the present invention. As shown, the small-size wireless remote-control pushbutton 3 may also be mounted on or near a trunk lid handle 4. When the trunk-mount pushbutton 3 is pushed, a trunk signal is sent to waken up the main controller 1 to send a signal to the remote controller 2 carried by a user for code matching. When the code is found correct, the trunk lid is unlocked and the anti-theft system is released. When the trunk lid is closed, the trunk-mount pushbutton 3 may be pushed to lock the trunk lid and enable the anti-theft system.

The present invention has been described with some preferred embodiments thereof and it is understood that many changes and modifications in the described embodiments can be carried out without departing from the scope and the spirit of the invention that is intended to be limited only by the appended claims.

## Claims

1. An auto anti-theft system with door-mount wireless remote-control pushbutton, comprising:
a main controller (1) to be mounted in a car for controlling the operation of said auto anti-theft system;
a remote controller (2) normally carried by a user for code matching with the main controller (1); and
a small-size wireless remote-control pushbutton (3) sending wirelessly a signal to the main controller (1) to be mounted on or near a car door, **characterized in that**
said small-size wireless remote-control pushbutton (3) includes a one-legged coupling section (31) fixing the remote-control pushbutton (3) into a keyhole on a door handle of the car, when inserted into said keyhole.

2. The auto anti-theft system with door-mount wireless remote-control pushbutton as claimed in claim 1, wherein said remote controller (2) carried by the user is set to automatically send a signal at intervals of a few seconds, and said signal sent by said remote controller (2) having an effective range of a few meters; and said main controller (1) is set to hold on for a few seconds when the signal sent by said remote controller (2) is received and checked as correct by said main controller (1); the holding time of said main controller (1) being longer than the signal sending interval of said remote controller (2); whereby when the user is in the vicinity of the car, said wireless remote-control pushbutton (3) must be pushed for said main controller (1) to unlock the car door and release the anti-theft system; and when the user gets off the car and closes the car door, said main controller (1) may be wakened up to lock the car door and enable the anti-theft system simply by pushing said wireless remote-control pushbutton (3) without pressing the remote controller button.

3. The auto anti-theft system with door-mount wireless remote-control pushbutton as claimed in claim 1, wherein said main controller (1) is set to be wakened up to send a signal having an effective range of a few meters when the user is in the vicinity of the car and pushes said wireless remote-control pushbutton (3), and said remote controller (2) is set to send a code to said main controller (1) for code matching as soon as said remote controller (2) receives a signal sent by said main controller (1), and said main controlled (1) immediately unlocks the car door and releases said anti-theft system when said code sent by said remote controller (2) is checked as correct; and wherein said main controller (1) is set to be wakened up to lock the car door and enable said anti-theft system when the user gets off the car, closes the door, and pushes said wireless remote-control pushbutton (3).

4. The auto anti-theft system with door-mount wireless remote-control pushbutton as claimed in claim 1, wherein a master control code is set for said small-size wireless remote-control pushbutton (3), so that said wireless remote-control pushbutton (3) may control the locking and unlocking of all doors of the car, and the releasing and enabling of said anti-theft system.

5. The auto anti-theft system with door-mount wireless remote-control pushbutton as claimed in claim 1, wherein a trunk code is set for said small-size wireless remote-control pushbutton (3), so that said wireless remote-control pushbutton (3) may control the locking and unlocking of a trunk lid, and the releasing and enabling of said anti-theft system.

## Patentansprüche

1. Kfz-Diebstahlschutzsystem mit einem an einer Tür befestigten drahtlosen Fernsteuerdruckknopf, aufweisend:
ein Hauptsteuergerät (1), das in einem Auto zum Steuern des Betriebs des Kfz-Diebstahlschutzsystems zu befestigen ist;
ein Fernsteuergerät (2), das normalerweise von einem Benutzer zum Abgleichen eines Codes mit dem Hauptsteuergerät (1) getragen wird; und
einen kleinen drahtlosen Fernsteuerdruckknopf (3), der drahtlos ein Signal an das Hauptsteuergerät (1) sendet und an oder in der Nähe einer Autotür zu befestigen ist, **dadurch gekennzeichnet, dass**
der kleine drahtlose Fernsteuerdruckknopf (3) einen einbeinigen Kopplungsabschnitt (31) umfasst, der den Fernsteuerdruckknopf (3) in ein Schlüsselloch an einem Türgriff des Autos anbringt, wenn dieser in das Schlüsselloch eingeführt ist.

2. Kfz-Diebstahlschutzsystem mit einem an einer Tür befestigten drahtlosen Fernsteuerdruckknopf nach Anspruch 1, wobei das Fernsteuergerät (2), das von dem Benutzer getragen wird, so eingestellt ist, dass es automatisch ein Signal in Intervallen von ein paar Sekunden aussendet, und das Signal, das von dem Fernsteuergerät (2) ausgesendet wurde, einen effektiven Bereich von einigen Metern besitzt; und wobei das Hauptsteuergerät (1) so eingestellt ist, dass es einige Sekunden abwartet, wenn das Signal, das von dem Fernsteuergerät (2) ausgesendet wurde, empfangen wird und als korrekt von dem Hauptsteuergerät (1) überprüft wurde; und wobei die Wartezeit des Hauptsteuergeräts (1) länger ist als das Aussendeintervall des Fernsteuergeräts (2), wodurch, wenn der Benutzer sich in der Nähe des Autos befindet, der drahtlose Fernsteuerdruckknopf (3) gedrückt werden muss, so dass das Hauptsteuergerät (1) die Autotür entsperrt und das Diebstahlschutzsystem freigibt; und wobei, wenn der Benutzer aus dem Auto aussteigt und die Autotür schließt, das Hauptsteuergerät (1) seinen Betrieb wieder aufnehmen kann, um die Autotür zu sperren und das Diebstahlschutzsystem durch einfaches Drücken des drahtlosen Fernsteuerdruckknopfes (3) aktiviert, ohne dass der Fernsteuerdruckknopf gedrückt wird.

3. Kfz-Diebstahlschutzsystem mit einem an einer Tür befestigten drahtlosen Fernsteuerdruckknopf nach Anspruch 1, wobei das Hauptsteuergerät (1) so eingestellt ist, dass es seinen Betrieb wieder aufnimmt, um ein Signal mit einem effektiven Bereich von einigen Metern auszusenden, wenn der Benutzer sich in der Nähe des Autos befindet und den drahtlosen Fernsteuerdruckknopf (3) drückt, und wobei das Fernsteuergerät (2) so eingestellt ist, dass es einen Code an das Hauptsteuergerät (1) aussendet, um den Code abzugleichen, sobald das Fernsteuergerät (2) ein Signal, das von dem Hauptsteuergerät (1) ausgesandt wurde, empfängt, und wobei das Hauptsteuergerät (1) unmittelbar die Autotür entsperrt und das Diebstahlschutzsystem freigibt, wenn der Code, der von dem Fernsteuergerät (2) ausgesendet wurde, als korrekt überprüft worden ist; und wobei das Hauptsteuergerät (1) so eingestellt ist, dass es seinen Betrieb wieder aufnimmt, um die Autotür zu sperren und das Diebstahlschutzsystem zu aktivieren, wenn der Benutzer aus dem Auto aussteigt, die Tür verschließt und den drahtlosen Fernsteuerdruckknopf (3) drückt.

4. Kfz-Diebstahlschutzsystem mit einem an einer Tür befestigten drahtlosen Fernsteuerdruckknopf nach Anspruch 1, wobei ein Master-Steuercode für den kleinen drahtlosen Fernsteuerdruckknopf (3) eingestellt ist, so dass der drahtlose Fernsteuerdruckknopf (3) das Sperren und Entsperren sämtlicher Türen des Autos und das Freigeben und Aktivieren des Diebstahlschutzsystems steuern kann.

5. Kfz-Diebstahlschutzsystem mit einem an einer Tür befestigten drahtlosen Fernsteuerdruckknopf nach Anspruch 1, wobei ein Kofferraum-Code für den kleinen drahtlosen Fernsteuerdruckknopf (3) eingestellt ist, so dass der drahtlose Fernsteuerdruckknopf (3) das Sperren und Entsperren eines Kofferraumdeckels und das Freigeben und Aktivieren des Diebstahlschutzsystems steuern kann.

## Revendications

1. Système d'antivol de véhicule automobile doté d'un bouton-poussoir de télécommande monté sur une portière, comprenant :
- un organe de commande principal (1) destiné à être monté sur un véhicule automobile afin de contrôler le fonctionnement dudit système d'antivol de véhicule automobile ;
- un organe de télécommande (2) normalement transporté par un utilisateur pour la mise en correspondance de code avec l'organe de commande principal (1) ; et
- un bouton-poussoir de télécommande de petite taille (3) permettant d'envoyer par transmission sans fil un signal à l'organe de commande principal (1), destiné à être monté sur ou à proximité d'une portière de véhicule automobile, **caractérisé en ce que**
ledit bouton-poussoir de télécommande de petite taille (3) inclut une section de couplage à patte unique (31) permettant de fixer le bouton-poussoir de télécommande (3) dans le trou de serrure d'une poignée de portière du véhicule automobile, lorsqu'il est inséré dans ledit trou de serrure.

2. Système d'antivol de véhicule automobile doté d'un bouton-poussoir de télécommande monté sur une portière selon la revendication 1, dans lequel ledit organe de télécommande (2) transporté par l'utilisateur est réglé de manière à envoyer automatiquement un signal à intervalles de quelques secondes, et ledit signal envoyé par ledit organe de télécommande (2) étant doté d'une portée efficace de quelques mètres ; ledit organe de commande principal (1) est réglé de manière à attendre pendant quelques secondes lorsque le signal envoyé par ledit organe de télécommande (2) est reçu et vérifié comme étant correct par ledit organe de commande principal (1) ; le temps d'attente dudit organe de commande principal (1) étant plus long que l'intervalle d'envoi du signal dudit organe de télécommande (2) ; de la sorte, lorsque l'utilisateur se trouve à proximité du véhicule automobile, ledit bouton-poussoir de télécommande (3) doit être poussé afin que ledit organe de commande principal (1) déverrouille la portière du véhicule automobile et désactive le système d'antivol ; et, lorsque l'utilisateur descend du véhicule automobile et ferme la portière du véhicule automobile, ledit organe de commande principal (1) peut être réactivé de manière à verrouiller la portière du véhicule automobile et de manière à activer le système d'antivol simplement en poussant ledit bouton-poussoir de télécommande (3) sans appuyer sur le bouton de l'organe de télécommande.

3. Système d'antivol de véhicule automobile doté d'un bouton-poussoir de télécommande monté sur une portière selon la revendication 1, dans lequel ledit organe de commande principal (1) est réglé de manière à être réactivé afin d'envoyer un signal doté d'une portée efficace de quelques mètres lorsque l'utilisateur se trouve à proximité du véhicule automobile et pousse ledit bouton-poussoir de télécommande (3), et ledit organe de télécommande (2) est réglé de manière à envoyer un code audit organe de commande principal (1) pour la mise en correspondance de code dès que ledit organe de télécommande (2) reçoit un signal envoyé par ledit organe de commande principal (1), et ledit organe de commande principal (1) déverrouille immédiatement la portière du véhicule automobile et désactive ledit système d'antivol lorsque ledit code envoyé par ledit organe de télécommande (2) est vérifié comme étant correct ; et dans lequel ledit organe de commande principal (1) est réglé de manière à être réactivé en vue de verrouiller la portière du véhicule automobile et en vue d'activer ledit système d'antivol lorsque l'utilisateur descend du véhicule automobile, ferme la portière et pousse ledit bouton-poussoir de télécommande (3).

4. Système d'antivol de véhicule automobile doté d'un bouton-poussoir de télécommande monté sur une portière selon la revendication 1, dans lequel un code de commande principale est défini pour ledit bouton-poussoir de télécommande de petite taille (3), de sorte que ledit bouton-poussoir de télécommande (3) peut contrôler le verrouillage et le déverrouillage de toutes les portières du véhicule automobile, ainsi que la désactivation et l'activation dudit système d'antivol.

5. Système d'antivol de véhicule automobile doté d'un bouton-poussoir de télécommande monté sur une portière selon la revendication 1, dans lequel un code de coffre est défini pour ledit bouton-poussoir de télécommande de petite taille (3), de sorte que ledit bouton-poussoir de télécommande (3) peut contrôler le verrouillage et le déverrouillage d'un couvercle de coffre, ainsi que la désactivation et l'activation dudit système d'antivol.
